# EUROPÄISCHE PATENTSCHRIFT

(11) **EP 3 418 132 B1**
(45) Veröffentlichungstag und Bekanntmachung des Hinweises auf die Patenterteilung: **04.03.2020**
(21) Anmeldenummer: 18150140.4
(22) Anmeldetag: 03.01.2018
(51) Int. Cl.: B60R 25/10

(54) **USB-LADEGERÄT FÜR KRAFTFAHRZEUGE MIT ALARMFUNKTION**
USB CHARGER FOR MOTOR VEHICLES HAVING AN ALARM FUNCTION
APPAREIL DE CHARGEMENT USB POUR VÉHICULES AUTOMOBILES POURVU DE FONCTION D'ALARME

(30) Priorität: 20.06.2017 DE 202017103663 U
(43) Veröffentlichungstag der Anmeldung: 26.12.2018
(73) Patentinhaber: Technaxx Deutschland GmbH & Co. KG, 60388 Frankfurt (DE)
(72) Erfinder: Pekcan, Pascal, 60388 Frankfurt (DE)
(74) Vertreter: Kugler, Jörg

(56) Entgegenhaltungen:
- EP-A1- 1 950 108
- JP-A- 2003 182 525
- JP-A- 2006 199 254

## Beschreibung

USB-Ladegeräte sind bekannt. Ebenso bekannt sind Anschlussadapter zum Anschluss elektrischer Verbraucher am Zigarettenanzünder eines Kraftfahrzeuges. JP2006199254A offenbart eine Alarmeinheit mit USB-Anschlussbuchsen.

Aufgabe der Erfindung ist es, ein USB-Ladegerät für den Einsatz in einem Kraftfahrzeug zu optimieren und sinnvolle Zusatzfunktionen bereitzustellen.

Die Aufgabe wird erfindungsgemäß gelöst durch ein USB-Ladegerät mit den Merkmalen des Anspruchs 1.

Gegenstand der Erfindung ist demnach ein USB-Ladegerät mit einem Anschluss zum Einstecken in eine Zigarettenanzünder-Buchse eines Kraftfahrzeuges, mit einer Anzahl von USB-Anschlussbuchsen und mit einer integrierten Alarmeinheit zum Schutz gegen Eindringlinge in das Kraftfahrzeug, die einen Bewegungssensor und einen akustischen Alarmsignalgeber umfasst. Hierdurch werden auf unerwartete Weise verschiedene Funktionen, die synergistisch ineinandergreifen, innerhalb ein- und desselben Gerätes kombiniert.

Vorteilhafte Ausgestaltungen sind Gegenstand der abhängigen Ansprüche und der nachfolgenden detaillierten Beschreibung eines Ausführungsbeispiels.
FIG. 1 und 2 zeigen jeweils eine perspektivische Ansicht eines USB-Ladegerätes gemäß der Erfindung (Vorder- und Rückseite).
FIG. 3 zeigt eine Draufsicht auf eine zugehörige Fernbedienung.

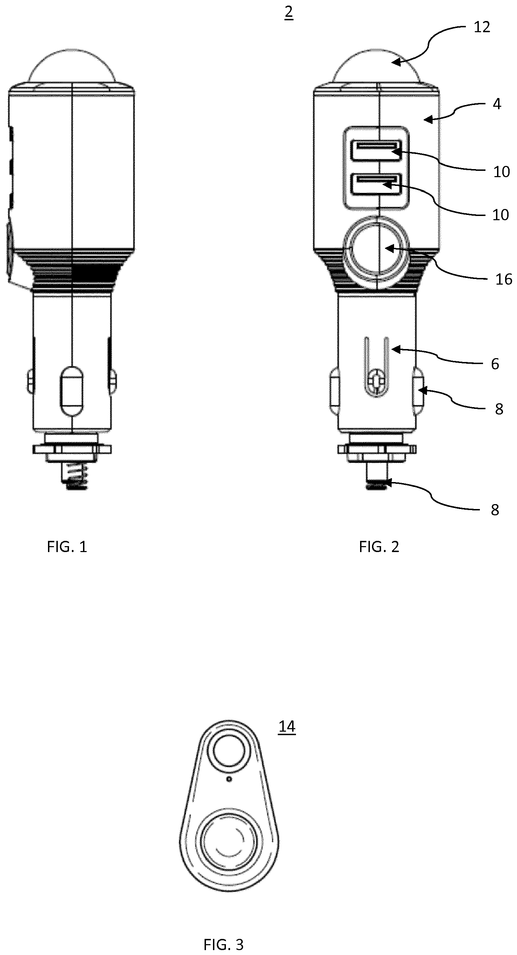

Das in den FIG. 1 und 2 dargestellte USB-Ladegerät 2 ist zum Anschluss an eine Buchse eines Zigarettenanzünders in einem Kraftfahrzeug vorgesehen und weist am unteren Ende des Gehäuses 4 einen entsprechend geformten Steck- oder Klemmanschluss 6 mit zugehörigen elektrischen Kontakten 8 auf. Eine in das Gehäuse integrierte elektronische Schaltung bringt die am Klemmanschluss 6 anliegende Batteriespannung des Kraftfahrzeuges, üblicherweise 12 bis 24 V Gleichspannung, auf die gemäß USB-Spezifikation erforderliche Gleichspannung von beispielsweise 5 V. Im oberen Teil des Gehäuses 4 befindet sich eine Anzahl von versenkt angeordneten USB-Anschlussbuchsen 10, hier zwei Stück, die über die elektronische Schaltung eingangsseitig mit der notwendigen Betriebsspannung versorgt werden. An den USB-Anschlussbuchsen 10 können beliebige elektronische Geräte, die entsprechende USB-Stecker besitzen, angeschlossen und bedarfsweise aufgeladen werden. Zum Schutz derartiger externer Geräte weist die elektronische Schaltung einen Kurzschlussdetektor und einen Überlastschutz auf, der die Stromabgabe auf einen maximalen Wert von beispielsweise 2,6 A begrenzt.

Um für eine gewisse Zeit einen autarken Betrieb zu ermöglichen, wenn bei ausgeschalteter Zündung des Kraftfahrzeuges keine Spannung am Klemmanschluss 6 anliegt, weist das USB-Ladegerät 2 eine in das Gehäuse 4 integrierte wiederaufladbare Batterie, etwa eine Lithium-Ionen Batterie oder Lithium-Polymer Batterie mit einer Kapazität von beispielsweise 300 mAh, auf. Die wiederaufladbare Batterie (Akkumulator) ist mit der elektronischen Schaltung in einer solchen Weise verbunden, dass die Funktionalität einer sogenannten Powerbank verwirklicht ist. Das heißt, die wiederaufladbare Batterie wird bei am Klemmanschluss 6 anliegender Kraftfahrzeug-Batteriespannung aufgeladen und speist später die USB-Anschlussbuchsen 10 (und somit die angeschlossenen Verbraucher), wenn die Kraftfahrzeug-Batteriespannung nicht zur Verfügung steht.

Ein weiterer Zusatznutzen wird dadurch geboten, dass das USB-Ladegerät 2 eine integrierte Alarmeinheit aufweist. Zu diesem Zweck ist in das obere Ende des im Wesentlichen stab- oder keulenförmigen Gehäuses 4 ein Bewegungsmelder bzw. Bewegungssensor 12, insbesondere vom Typ PIR-Sensor integriert. Ein PIR-Sensor (englisch Pyroelectric Infrared Sensor oder Passive Infrared Sensor), ist ein Halbleitersensor zur Detektion von Temperaturänderungen. PIR-Sensoren beruhen auf der namensgebenden Pyroelektrizität, einer Eigenschaft einiger piezoelektrischer Halbleiterkristalle. Dabei führt eine Temperaturänderung zu einer messbaren Änderung der elektrischen Spannung. Im Rahmen der vorliegenden Erfindung wird solch ein PIR-Sensor eingesetzt, um die von einem Eindringling in das Kraftfahrzeug ausgestrahlte Wärmestrahlung zu detektieren und einen Alarm auszulösen. Dazu ist in das Gehäuse 4 ein akustischer Alarmsignalgeber 16, etwa eine laute Hupe oder eine Sirene, integriert. Wie in FIG. 2 dargestellt, kann es sich bei dem akustischer Alarmsignalgeber 16 in einer bevorzugten Variante um einen elektrischen Buzzer oder Warnsummer handeln, der vorteilhafterweise in eine seitliche Aussparung im Gehäuse 4 eingesetzt ist. Der Buzzer kann beispielsweise eine bevorzugt elektromagnetisch oder piezoelektrisch zu Schwingungen anregbare Membran, insbesondere eine Metallmembran, oder einen sonstigen Klangkörper zur Klangerzeugung aufweisen. Durch den schrillen Alarmton wird der Eindringling verschreckt und im Regelfall vertrieben.

Im Ausführungsbeispiel deckt der PIR-Sensor einen kegelförmigen Raumbereich (Detektionsvolumen) mit einem Öffnungswinkel von beispielsweise 120° bei einer Reichweite von 3 bis 4 Metern ab. Dies ist sehr gut auf die Innenraumabmessung üblicher Kraftfahrzeuge abgestimmt.

Die Spannungsversorgung der Alarmeinheit erfolgt über die oben erwähnte Powerbank, so dass - bei voll aufgeladener wiederaufladbarer Batterie und bei Abwesenheit weiterer Verbraucher an den USB-Anschlussbuchsen - eine Standbyzeit von beispielsweise 10 Tagen verwirklicht ist, wenn die Zündung des Kraftfahrzeuges ausgeschaltet ist.

Die Aktivierung (Scharfschaltung) und Deaktivierung der Alarmeinheit durch den autorisierten Benutzer erfolgt über eine zugehörige drahtlose Fernbedienung 14, die in FIG 3 dargestellt ist. Ein bereits ausgelöster Alarmton kann nur über die Fernbedienung 14 wieder ausgeschaltet werden. Selbst wenn der Eindringling das USB-Ladegerät 2 mit der der integrierten Alarmeinheit aus dem Zigarettenanzünder zieht, bleibt der Alarmton angeschaltet, jedenfalls für eine voreingestellte Zeit von beispielsweise einigen Minuten. Anschließend kann zur Schonung der Umwelt eine automatische Abschaltung vorgesehen sein.

Zusammengefasst braucht der Benutzer das USB-Ladegerät 2 nur in den Zigarettenanzünder-Anschluss eines Kraftfahrzeuges einzustecken und hat auf diese Weise eine Powerbank mit USB-Anschlüssen zur Verfügung, die sich während der Fahrt automatisch immer wieder auflädt. Die ebenfalls in das Gerät eingebaute Alarmeinheit lässt sich über eine zugehörige Fernbedienung 14 bedarfsweise aktivieren und erkennt mit Hilfe eines Bewegungssensors 12 Eindringlinge bzw. Einbrecher. In diesem Fall wird ein lautes akustisches Alarmsignal ausgelöst, welches sich nur über die Fernbedienung 14 wieder ausschalten lässt. Das Gerät ist kompakt (Abmessungen z. B. 32 x 34 x 95 mm) und portabel. Durch den bewussten Verzicht auf komplizierte Zusatzfunktionen ist es sehr einfach zu bedienen.

### Bezugszeichenliste

- 2: USB-Ladegerät
- 4: Gehäuse
- 6: Klemmanschluss
- 8: elektrische Kontakte
- 10: USB-Anschlussbuchsen
- 12: Bewegungssensor
- 14: Fernbedienung
- 16: Alarmsignalgeber

## Patentansprüche

1. USB-Ladegerät (2) mit einem Gehäuse, welches einen Anschluss zum Einstecken in eine Zigarettenanzünder-Buchse eines Kraftfahrzeuges aufweist, mit einer Anzahl von in das Gehäuse integrierten USB-Anschlussbuchsen (10) und mit einer in das Gehäuse integrierten Alarmeinheit zum Schutz gegen Eindringlinge in das Kraftfahrzeug, die einen Bewegungssensor (12) und einen akustischen Alarmsignalgeber (16) umfasst.

2. USB-Ladegerät (2) nach Anspruch 1 mit einer integrierten wiederaufladbaren Batterie, die über die Zigarettenanzünder-Buchse durch ein Kraftfahrzeug-Bordnetz aufladbar ist, und die die USB-Anschlussbuchsen (10) und die Alarmeinheit mit Betriebsspannung versorgt, falls das Kraftfahrzeug-Bordnetz nicht zur Verfügung steht.

3. USB-Ladegerät (2) nach Anspruch 1 oder 2, wobei die Alarmeinheit über eine zugehörige drahtlose Fernbedienung (14) aktivierbar und deaktivierbar ist.

4. USB-Ladegerät (2) nach Anspruch 3, wobei ein bereits ausgelöster Alarm sich zumindest für eine vorgegebene Zeitspanne nur durch die Fernbedienung (14) ausschalten lässt.

5. USB-Ladegerät (2) nach einem der vorhergehenden Ansprüche, wobei der Bewegungssensor (12) ein PIR-Sensor ist.

## Claims

1. A USB charger (2) with a housing including a connector for plugging the USB charger into a cigarette-lighter socket of a motor vehicle, having a number of USB connection sockets (10) integrated into the housing and having an alarm unit integrated into the housing for protection against intruders into the motor vehicle, comprising a motion sensor (12) and an acoustic alarm-signal generator (16).

2. The USB charger (2) of claim 1, having an integrated rechargeable battery which can be charged via the cigarette-lighter socket by means of a motor-vehicle on-board network and which supplies an operating voltage to the USB connection sockets (10) and to the alarm unit if the motor-vehicle on-board network is not available.

3. The USB charger (2) of claim 1 or 2, wherein the alarm unit can be activated and deactivated via an associated wireless remote control (14).

4. The USB charger (2) of claim 3, wherein an alarm already triggered can only be switched off by use of the wireless remote control (14) for at least a predefined period of time.

5. The USB charger (2) of any of the preceding claims, wherein the motion sensor (12) is a PIR sensor.

## Revendications

1. Appareil de chargement USB (2) avec un boîtier comprenant un raccord pour enficher l'appareil de chargement USB dans une prise d'allume-cigarettes d'un véhicule automobile, ayant un nombre de prises de connexion USB (10) integrées dans le boîtier et ayant une unité d'alarme integrée dans le boîtier pour la protection contre des intrus dans le véhicule automobile, comprenant un détecteur de mouvements (12) et un générateur de signaux d'alarme (16) acoustiques.

2. Appareil de chargement USB (2) selon la revendication 1, ayant une batterie rechargeable intégrée qui peut être chargée par la prise d'allume-cigarettes au moyen d'un réseau de bord d'un véhicule automobile et qui alimente une tension de service aux prises de connexion USB (10) et à l'unité d'alarme si le réseau de bord du véhicule automobile n'est pas disponible.

3. Appareil de chargement USB (2) selon la revendication 1 ou 2, dans lequel l'unité d'alarme peut être activée et désactivée par une télécommande (14) sans fil y affectée.

4. Appareil de chargement USB (2) selon la revendication 3, dans lequel un alarme déjà déclenché ne peut être arrêté qu'au moyen de la télécommande (14), au moins pendant une période de temps prédéfinie.

5. Appareil de chargement USB (2) selon l'une quelconque des revendications précédentes, dans lequel le détecteur de mouvements (12) est un détecteur PIR.
